# EUROPÄISCHE PATENTSCHRIFT

(11) **EP 2 697 892 B1**
(45) Veröffentlichungstag und Bekanntmachung des Hinweises auf die Patenterteilung: **06.05.2015**
(21) Anmeldenummer: 12743365.4
(22) Anmeldetag: 13.06.2012
(51) Int. Cl.: H02K 3/34, H02K 3/40

(54) **ASYNCHRONMASCHINE**
ASYNCHRONOUS MACHINE
MACHINE ASYNCHRONE

(30) Priorität: 14.06.2011 DE 102011106480
(43) Veröffentlichungstag der Anmeldung: 19.02.2014
(73) Patentinhaber: Voith Patent GmbH, 89522 Heidenheim (DE)
(72) Erfinder: HILDINGER, Thomas, 89522 Heidenheim (DE); VESER, Stefan, 89558 Treffelhausen (DE); EILEBRECHT, Philipp, 89522 Heidenheim (DE); KOEDDING, Ludger, 89518 Heidenheim (DE)
(74) Vertreter: Dr. Weitzel & Partner
(86) Internationale Anmeldenummer: PCT/EP2012/002487
(87) Internationale Veröffentlichungsnummer: WO 2012/171635

(56) Entgegenhaltungen:
- WO-A1-00/74214
- DE-A1- 4 233 558
- DE-A1- 19 547 229
- US-A- 2 333 575

## Beschreibung

Die Erfindung betrifft eine Asynchronmaschine mit einem Schleifringläufer für den Einsatz mit variablen Drehzahlen gemäß der in dem Oberbegriff des Anspruchs 1 näher definierten Art. Außerdem betrifft die Erfindung einen Maschinensatz für eine Wasserkraftanlage mit einer solchen Asynchronmaschine.

Asynchronmaschinen sind aus dem allgemeinen Stand der Technik bekannt. Typischerweise werden Asynchronmaschinen als Motoren oder Generatoren eingesetzt. Sie bestehen aus einem Läufer mit Wicklungen, welcher über Schleifringe kontaktiert ist. Um die Wicklungen in den Läufer beziehungsweise Rotor der Asynchronmaschine sicher und zuverlässig zu verankern ist es allgemein bekannt und üblich, die Wicklungen in Nuten in dem Rotor der Asynchronmaschine zu positionieren und diese dort zu verkleben. Typischerweise erfolgt dies durch das Eintauchen des kompletten Rotors in ein geeignetes Bad, beispielsweise aus Epoxydharz, sodass der Rotor als Ganzes verklebt wird.

Dieses Verfahren zum Befestigen der Wicklungselemente im Bereich des Rotors einer Asynchronmaschine ist erprobt und zuverlässig. Allerdings ist der Aufbau auf eine gewisse Baugröße der Asynchronmaschine beschränkt. Die Problematik liegt nun darin, dass Asynchronmaschinen, insbesondere doppelgespeiste Asynchronmaschinen, zunehmend mit größerer Baugröße realisiert werden, und beispielsweise zum Einsatz in Wasserkraftanlagen als Generator oder Motorgenerator im Falle eines Pumpspeicherkraftwerks vorgesehen sind. Derartige Maschinen, welche typischerweise in einer Leistungsklasse von mehr als 30 MVA ausgebildet sind, weisen dabei eine sehr große Baugröße auf. Die Rotordurchmesser liegen typischerweise in der Größenordnung von 3 bis 8 m, sodass ein vollständiges Tränken des Rotors beispielsweise unter Vakuum mit einem Epoxydharz nicht oder nur mit erheblichem Aufwand zu realisieren ist. Auch das nachfolgende Aushärten, beispielsweise in einem Autoklaven, erfordert extrem große Aufbauten und ist daher äußerst aufwändig und teuer. Bei den üblichen Stückzahlen ist dies wirtschaftlich nicht möglich.

Eine weitere Problematik eines solchen Aufbaus, selbst wenn es gelänge, die Wicklungselemente in dem Rotor mit vertretbarem Kostenaufwand durch Tränken des Rotors zu verkleben, liegt darin, dass bei derartigen Maschinen die Wartungsfreundlichkeit eine entscheidende Rolle spielt. Aufgrund der Gesamtkosten und der benötigten Lebensdauer einer derartigen Maschine bis zur Amortisation muss der Austausch von einzelnen Wicklungselementen möglich sein, ohne dass dabei der Rotor beziehungsweise Rotorkörper der Maschine beschädigt wird. Bei vollständig verklebten Aufbauten ist dies so nicht möglich.

Eine weitere Problematik besteht darin, dass die Maschinen mit sehr hohen variablen Drehzahlen betrieben werden. Die Fliehkräfte auf die Wicklungselemente, welche bei dieser Baugröße entsprechend groß und schwer ausgebildet sind, werden damit sehr groß. Ein reines Verkleben kann diese Fliehkräfte gegebenenfalls nicht halten. Deshalb ist es bereits beim Stand der Technik üblich, radial außen im Bereich der Nuten, welche die Wicklungselemente aufnehmen, Sperrelemente vorzusehen, welche die Nuten radial außen verschließen und im formschlüssigen Eingriff mit dem Rotorkörper ausgebildet sind. Mit dieser Maßnahme lassen sich die Wicklungselemente zwar gegen Fliehkräfte sichern, problematisch bleibt jedoch, dass die Wicklungselemente, welche typischerweise eine Isolierung und einen Außenglimmschutz um die Isolierung aufweisen, während des regulären Betriebs mit den Wandungen der Nuten, in welchen sie aufgenommen sind, in Berührung sein müssen, um eine zuverlässige elektrische Leitung zwischen dem Außenglimmschutz und dem Rotorkörper zu realisieren. Kommt es hier zu einer Unterbrechung der Berührung und zu einem Luftspalt, so setzt Funkenerosion aufgrund überschlagender Entladungen ein, welche die Isolierung und den Außenglimmschutz des Wicklungselements zerstören und damit den Rotor schädigen.

US 2 333 375 beschreibt eine Asynchronmaschine mit den im Oberbegriff des Anspruchs 1 zusammengefassten Merkmalen.

Aus DE 195 47 229 A1 und DE 42 33 558 A1 sind Befestigungen für Wicklungselemente bekannt geworden.

Die Aufgabe der hier vorliegenden Erfindung besteht nun darin, eine Asynchronmaschine anzugeben, bei welcher die Wicklungselemente im Bereich des Rotors so befestigt sind, dass eine zuverlässige Kontaktierung des Außenglimmschutzes der Isolierung des Wicklungselements mit dem Material des Rotorkörpers auch bei schwankenden thermischen und/oder mechanischen Belastungen sicher und zuverlässig garantiert ist, und gleichzeitig bei guter Fixierung der Wicklungselemente im Bereich des Rotors eine einfache Austauschbarkeit derselben, ohne den Rotor zu beschädigen, sichergestellt ist.

Erfindungsgemäß wird diese Aufgabe durch die im kennzeichnenden Teil des Anspruchs 1 genannten Merkmale gelöst. Weitere vorteilhafte Ausgestaltungen der erfindungsgemäßen Asynchronmaschine sind in den hiervon abhängigen Unteransprüchen angegeben. Außerdem ist im Anspruch 11 ein Maschinensatz mit einer derartigen Asynchronmaschine angegeben.

Bei der erfindungsgemäßen Asynchronmaschine ist es also vorgesehen, dass die Rotorwicklungselemente in ihren Nuten in radialer Richtung durch Sperrelemente, wie auch beim Stand der Technik, gehalten werden. Zusätzlich ist es gemäß der Erfindung vorgesehen, dass zwischen dem Außenglimmschutz der Wicklungselemente und wenigstens einer in Umfangsrichtung benachbarten Wand der Nut elektrisch leitfähige Verbindungsmittel zum lösbaren Verbinden des Wicklungselements mit dem Rotorkörper angeordnet sind. Die leitfähigen Verbindungsmittel, welche ein lösbares Verbinden des Wicklungselements mit der Nut zumindest in Umfangsrichtung erlauben, stellen einerseits die mögliche Demontage des Wicklungselements aus der Nut immer sicher und können andererseits durch die sichere und zuverlässige Verbindung gewährleisten, dass eine elektrische Leitfähigkeit zwischen der Isolation und dem Außenglimmschutz des Wicklungselements und der Wandung der Nut gewährleistet ist. Funkenüberschläge und eine dadurch verursachte Funkenerosion, welche die Isolation des Wicklungselements beschädigen könnte, lässt sich dadurch sicher und zuverlässig vermeiden. Unter einer elektrisch leitfähigen Verbindung im Sinne der hier vorliegenden Erfindung ist dabei jede Verbindung zu verstehen, welche eine Leitfähigkeit ausweist, welche zumindest in etwa in der Größenordnung der Leitfähigkeit des Außenglimmschutzes der Wicklungselemente liegt.

Bei dem erfindungsgemäßen Aufbau der Asynchronmaschine ist es vorgesehen, dass die Verbindungsmittel eine elektrisch leitfähige Lage und einen aushärtenden pastösen Stoff aufweisen. Die elektrisch leitfähige Lage kann beispielsweise eine Folie oder insbesondere ein elektrisch leitfähiges Papier sein. Diese elektrisch leitfähige Lage gewährleistet zusammen mit einem pastösen Stoff, beispielsweise einem Kitt, eine sichere und zuverlässige Befestigung der Wicklungselemente in den Nuten.

In einer vorteilhaften Weiterbildung hiervon ist der pastöse Stoff dabei so ausgebildet, dass er beim Aushärten sein Volumen vergrößert. Wenn dieser Aufbau dann in die Nuten eingesetzt wird, quillt der pastöse Stoff entsprechend auf und sorgt so für einen sicheren formschlüssigen Verbund mit den Nuten.

Der pastöse Stoff kann beispielsweise auf der Basis eines Epoxidharzes ausgebildet sein.

Gemäß einer weiteren sehr günstigen Ausgestaltung dieser Idee kann es außerdem vorgesehen sein, dass der pastöse Stoff elastisch aushärtet. Er kann also mit einer gewissen Elastizität aushärten, beispielsweise bei der Verwendung eines Silikons als pastösen Stoff. Damit lässt sich auch bei temperaturbedingten Schwankungen und/oder mechanischen Schwingungen in der Ausdehnung des Wicklungselements und der Nut ein entsprechender Ausgleich realisieren, sodass auch unter diesen Bedingungen eine sichere und zuverlässige elektrisch leitfähige Verbindung zwischen dem Außenglimmschutz des Wicklungselements und den Wandungen der Nut realisiert werden kann.

Erfindungsgemäß ist ferner vorgesehen, dass die Lage wenigstens einmal gefaltet ausgeführt ist, wobei der pastöse Stoff zwischen wenigstens zwei durch das Falten gebildeten Abschnitten angeordnet ist. Bei diesem Aufbau ist man hinsichtlich der Wahl des pastösen Stoffs deutlich freier, da dieser nicht mehr elektrisch leitfähig ausgebildet sein muss. Er wird so zwischen den durch das Falten gebildeten Abschnitten der Lage angeordnet, dass dieser lediglich mit der Lage in Berührung kommt. Die dem pastösen Stoff abgewandten Oberflächen der einzelnen Abschnitte der Lage kommen dann mit dem isolierten Wicklungselement einerseits und der Wandung der Nut andererseits in Berührung. Wenn der pastöse Stoff beim Aushärten sein Volumen vergrößert, sorgt er in der oben bereits beschriebenen Art für ein sicheres Halten des isolierten Wicklungselements in der Nut. Dadurch, dass er sowohl mit der Wandung der Nut als auch mit dem Außenglimmschutz des Wicklungselements jeweils nur über die Lage in Verbindung steht, ist einerseits die elektrische Leitfähigkeit zwischen dem Außenglimmschutz und der Wandung der Nut durch die Lage gewährleistet und andererseits kommt es mit beiden Partnern nicht zu einem Verkleben, sodass eine Demontage gegenüber dem oben beschriebenen Aufbau nochmals erleichtert wird.

In einer weiteren sehr vorteilhaften Ausgestaltung der erfindungsgemäßen Asynchronmaschine kann es ergänzend oder alternativ hierzu vorgesehen sein, dass die Verbindungsmittel Keile aus elektrisch leitendem Material umfassen. Mit solchen Keilen, welche vorzugsweise in radialer Richtung zwischen das Wicklungselement und die in Umfangsrichtung benachbarte Wandung der Nut eingebracht werden, kann ebenfalls eine mechanische Sicherung und formschlüssige Verbindung zwischen dem isolierten Wicklungselement und den Wandungen der Nut realisiert werden. Wenn das Material der Keile zumindest im oben beschriebenen Sinne elektrisch leitfähig ausgestaltet ist, wird außerdem die Leitfähigkeit gewährleistet. Prinzipiell wäre es selbstverständlich möglich, für die Keile entsprechende Materialien einzusetzen, welche eine leichte Elastizität aufweisen, sodass ein Lösen der Keile auch bei thermisch bedingten Ausdehnungsunterschieden zwischen den Wicklungselementen und dem Material des Rotorkörpers ein sicherer und zuverlässiger Halt der Keile realisiert werden kann.

In einer weiteren Ausgestaltung der erfindungsgemäßen Asynchronmaschine können die Verbindungselemente auch als Federelemente ausgebildet sein. Derartige Federelemente, welche beispielsweise als Wellfeldern realisiert werden können, haben dabei den entscheidenden Vorteil, dass sie einen sicheren und zuverlässigen Formschluss des Wicklungselements über die Federelemente mit der Wandung der Nut und vorzugsweise auf der dem Federelement gegenüberliegenden Seite des Wicklungselements direkt mit der Wandung der Nut realisieren. Damit lässt sich mit Federelementen, welche einseitig zwischen das Wicklungselement und die in Umfangsrichtung benachbarte Wandung der Nut eingebracht sind, eine sichere und zuverlässige Befestigung realisieren, welche gleichzeitig elektrisch leitend und mechanisch lösbar ausgebildet ist.

Eine besonders bevorzugte Verwendung für eine derartige Asynchronmaschine, welche in einer bevorzugten Weiterbildung als doppelgespeiste

Asynchronmaschine ausgeführt sein kann, liegt dabei im Einsatz in einem Maschinensatz für eine Wasserkraftanlage, mit einer Wasserturbine oder einer Pumpturbine und der Asynchronmaschine, welche von der Wasserturbine oder der Pumpturbine angetrieben ist beziehungsweise die Pumpturbine antreibt. Insbesondere bei einem derartigen Einsatz in einem Maschinensatz für eine Wasserkraftanlage, welche häufig eine Rotationsachse der Asynchronmaschine in Richtung der Schwerkraft aufweisen und typischerweise Leistungsklassen für die Asynchronmaschine oberhalb von 30 MVA benötigen, ist der Einsatz einer Asynchronmaschine in der oben beschriebenen Art mit der erfindungsgemäßen Art der Fixierung der Wicklungselemente in dem Rotorkörper von besonderer Bedeutung. Bei derartigen Maschinen, welche häufig mit sehr stark schwankenden Drehzahlen betrieben werden, stellt nämlich die mechanische Belastung und die thermische Belastung eine erhebliche Herausforderung dar. Dieser kann aufgrund der beschriebenen Art der elektrisch leitfähigen lösbaren Befestigung entgegengewirkt werden, sodass eine Beschädigung der Asynchronmaschine durch Funkenerosion im Bereich der Isolation der Wicklungselemente in dem Rotor sicher und zuverlässig verhindert werden kann. Der Aufbau ist dabei einfach und effizient und erlaubt insbesondere einen vergleichsweise einfachen Austausch eines eventuell beschädigten Wicklungselements, ohne dass hierbei der Rotor beim Austausch des Wicklungselements beschädigt wird. Dieser ist vor allem bei Asynchronmaschinen im Bereich von Wasserkraftanlagen von entscheidender Bedeutung, da diese sehr intensiv und über einen sehr langen Zeitraum hinweg genutzt werden. Außerdem müssen die Verbindungsmittel beim typischen Aufbau des Maschinensatzes mit senkrechter Rotationsachse die Vergleichsweise große und schwere Wicklungselements gegen die Schwerkraft halten. Mit den Erfindungsgemäßen Verbindungsmitteln ist dies gut möglich.

Weitere vorteilhafte Ausgestaltungen der erfindungsgemäßen Asynchronmaschine sowie des Maschinensatzes mit einer derartigen Asynchronmaschine ergeben sich aus den abhängigen Unteransprüchen zur Asynchronmaschine und werden anhand des Ausführungsbeispiels deutlich, welches nachfolgend unter Bezugnahme auf die Figuren näher erläutert wird.

Dabei zeigen:
- Figur 1: eine Prinzipdarstellung eines Maschinensatzes für eine Wasserkraftanlage;
- Figur 2: einen Ausschnitt aus einem Rotor einer Asynchronmaschine in einer Schnittebene senkrecht zur Rotationsachse;
- Figur 3: einen vergrößerten Ausschnitt der Darstellung in Figur 2 in einer ersten Ausführungsform;
- Figur 4: einen vergrößerten Ausschnitt der Darstellung in Figur 2 in einer zweiten Ausführungsform;
- Figur 5: einen vergrößerten Ausschnitt der Darstellung in Figur 2 in einer dritten Ausführungsform;
- Figur 6: eine dreidimensionale Ansicht einer vierten Ausführungsform des Verbindungselements gemäß der Erfindung; und
- Figur 7: eine Schnittdarstellung einer Vergrößerung eines Ausschnitts gemäß Figur 6.

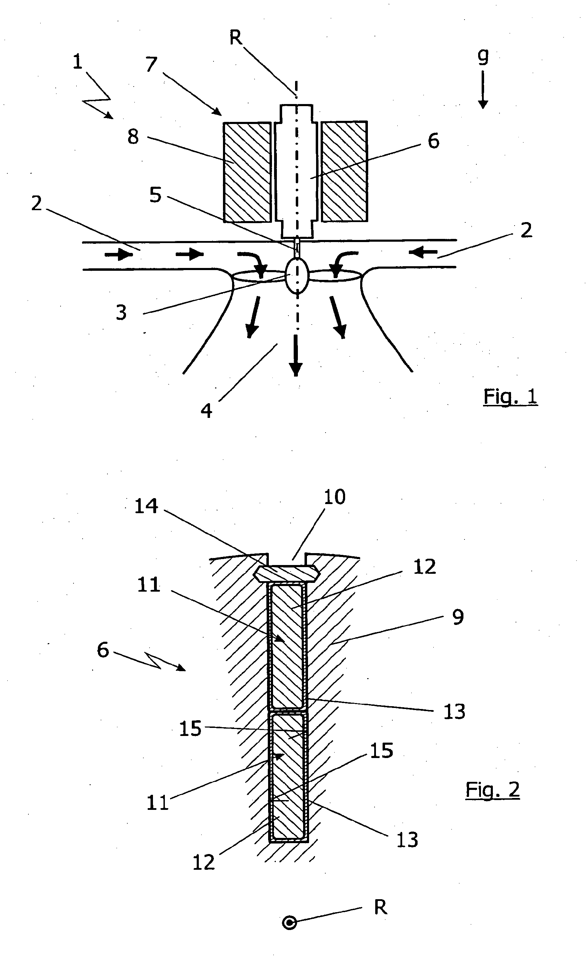

In der Darstellung der Figur 1 ist sehr stark schematisiert eine Wasserkraftanlage 1 zu erkennen. Wasserbaulich liegt der Kern der Wasserkraftanlage 1 in einem Zuleitungssystem 2, welches Wasser aus dem Bereich eines hier nicht dargestellten Oberwassers zu einer Wasserturbine 3 leitet und durch einen prinzipmäßig angedeuteten Diffusor 4 in den Bereich eines ebenfalls nicht dargestellten Unterwassers abführt. Die Wasserturbine 3, welche durch das vom Oberwasser zum Unterwasser fließende Wasser angetrieben wird, rotiert dabei um eine Rotationsachse R, welche, wie bei solchen Anlagen häufig üblich, senkrecht in Richtung der Schwerkraft g ausgerichtet ist. Die Rotation der Wasserturbine 3 wird über eine Welle 5 auf einen Rotor 6 einer doppelgespeisten Asynchronmaschine 7 mit Schleifringläufer übertragen. Die Asynchronmaschine 7 umfasst neben dem Rotor 6 außerdem einen prinzipmäßig angedeuteten Stator 8. Die Asynchronmaschine 7 dient in dem hier dargestellten Ausführungsbeispiel dazu, die von dem Wasser an der Wasserturbine 3 erzeugte Rotationsenergie in elektrische Energie umzuwandeln. Sie stellt in dem hier dargestellten Ausführungsbeispiel also einen Generator dar. Ergänzend oder alternativ hierzu wäre es selbstverständlich auch möglich, anstelle der hier dargestellten Wasserturbine 3 eine Pumpturbine einzusetzen. Diese Pumpturbine, wie sie beispielsweise bei Pumpspeicherkraftwerken üblich ist, kann einerseits Wasser, welches von dem Oberwasser in den Bereich des Unterwasser strömt, in der oben beschriebenen Art in Rotationsenergie umwandeln. Damit lässt sich mittels der Asynchronmaschine 7 elektrische Energie erzeugen. In Zeitpunkten, in denen ein elektrischer Energieüberschuss vorliegt, lässt sich die Asynchronmaschine 7 dann auch motorisch betreiben, um über die Pumpturbine Wasser wieder aus dem Bereich des Unterwassers in den Bereich des Oberwassers zurückzupumpen. Dieses kann dann, wenn ein höherer Bedarf an elektrischer Energie besteht, wieder zum Gewinnen von elektrischer Energie in der oben beschriebenen Art und Weise eingesetzt werden.

In der Darstellung der Figur 2 ist nun ein Ausschnitt aus einem Teil des Rotors 6 dargestellt. Der Querschnitt in einer Ebene senkrecht zur Rotationsachse R, welche in der Figur 2 in einer prinzipmäßigen nicht maßstäblich dargestellten Position angedeutet ist, zeigt einen Rotorkörper 9 des Rotors 6, welcher typischerweise aus mehreren in axialer Richtung aufeinandergestapelten Blechelementen ausgeführt ist. Dieser Rotorkörper 9 weist eine Nut 10 auf, welche in axialer Richtung der Rotationsachse R durch den Rotorkörper 10 verläuft und in radialer Richtung nach außen offen ausgebildet ist. In diese Nut 10 sind typischerweise zwei Wicklungselemente 11 eingelegt. Diese Wicklungselemente 11, welche auch als Stäbe bezeichnet werden, sind aus einem elektrisch sehr gut leitenden Material 12, wie beispielsweise Kupfer, aufgebaut. Sie können als Vollmaterial oder in Form von einzelnen miteinander verbundenen Materialsträngen realisiert sein. Der Aufbau der Wicklungselemente 11 weist neben dem elektrisch sehr gut leitenden Material 12 außerdem eine elektrische Isolierung 13 auf, welche in an sich bekannter Art und Weise, beispielsweise aus mit Epoxy-Harz getränkten um das elektrisch sehr gut leitende Material 12 gewickelten Glimmerbändern bestehen kann. Selbstverständlich handelt es sich bei der beschriebenen Größenordnung der Asynchronmaschine 7, welche für den typischen Einsatz in Wasserkraftanlagen 1 einen Durchmesser des Rotors 6 von ca. 3 bis 8 m aufweist und eine Leistung von mehr als 30 MVA hat, bei der Isolierung 13 um eine Hochspannungsisolierung. Bei einer solchen Hochspannungsisolierung ist typischerweise ein an sich bekannter Außenglimmschutz im Außenbereich der Isolierung 13 realisiert.

Dabei handelt es sich um eine elektrisch leitfähige Schicht oder einen elektrisch leitfähigen Schichtaufbau im Außenbereich der Isolierung 13, welcher eine Verbindung derselben mit dem geerdeten Rotorkörper 9 sicherstellt.

Die Wicklungselemente beziehungsweise Stäbe 11 unterliegen beim Betrieb der Asynchronmaschine 7, aufgrund der Rotation des Rotors 6 entsprechenden Fliehkräften, welche diese aus der Nut 10 in radialer Richtung herausbewegen könnten. Dies wird in dem hier dargestellten Aufbau durch ein Sperrelement 14 verhindert, welches so mit dem Material des Rotorkörpers 9 formschlüssig zusammenwirkt, dass dieses die Nut 10 in radialer Richtung nach außen verschließt und die Wicklungselemente 11 sicher und zuverlässig in radialer Richtung in der Nut 10 hält.

Kommt es nun zu einem Spaltraum zwischen dem Außenglimmschutz der Isolierung 13 und einer benachbarten Wand 15 der Nut 10, so kann dies zu einem Überschlag von Funken führen. Dadurch kann es zu einer Erosion im Bereich der Isolierung 13 kommen, welche dies letztlich zerstört und damit für einen funktionellen Schaden im Bereich der Asynchronmaschine 7 sorgt. Dies gilt es unter allen Umständen zu verhindern. Außerdem soll die Befestigung der Wicklungselemente 11 weiterhin mechanisch lösbar ausgebildet sein, sodass durch Entfernen des Sperrelements 14 die Wicklungselemente 11 aus der Nut 10 entfernt werden können.

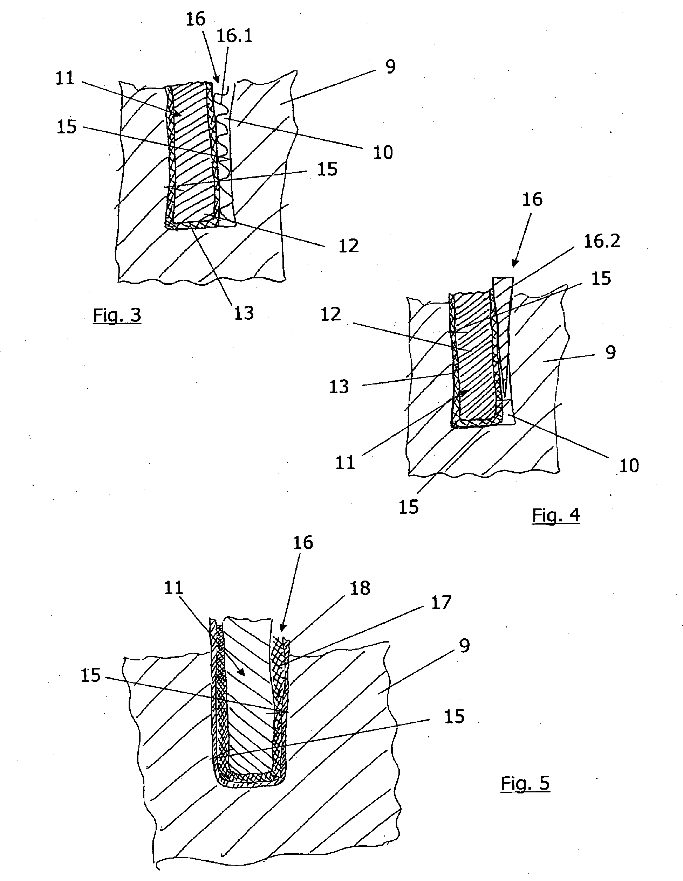

In der Darstellung der Figur 3 ist ein hierzu geeignetes erstes Verbindungsmittel 16 in Form einer Wellfeder 16.1 als Federelement zu erkennen. Die Wellfeder ist in dem hier dargestellten Ausschnitt des radial innenliegenden Wicklungselements 11 zwischen der Isolierung 13 mit dem Außenglimmschutz und der Wand 15 der Nut 10 angeordnet. Die Wellfeder 16 sorgt für ein sicheres Anpressen der elektrischen Isolierung 13 mit dem Außenglimmschutz auf der der Wellfeder 16.1 abgewandten Seite des Stabs 11 gegen die dortige Wand 15 der Nut 10 einerseits und eine mechanische Verbindung und elektrische Kontaktierung durch die elektrisch leitend ausgebildete Wellfeder 16.1 zwischen der elektrischen Isolierung 13 und der anderen Wand 15 der Nut 10 in Umfangsrichtung. Dadurch wird eine sichere und zuverlässige Befestigung erreicht, welche auch bei Schwingungen und andersartigen mechanischen Bewegungen im Bereich des Stabs 11 sowie Bewegungen aufgrund thermisch unterschiedlicher Ausdehnung des Stabs 11 und des Rotorkörpers 9 ein sichere Verbindung und einen zuverlässigen elektrisch leitenden Kontakt zwischen dem Rotorkörper 9 und der elektrischen Isolierung 13 des Stabs 11 sicherstellt.

In der Darstellung der Figur 4 ist eine alternative Ausführungsform des Verbindungsmittels 16 zu erkennen. Der Aufbau entspricht ansonsten dem in Figur 3 beschriebenen Aufbau. Anstelle der Wellfeder 16.1 ist das Verbindungsmittel 16 dabei als Keil 16.2 ausgeführt. Auch dieser Keil 16.2, welcher den Stab 11 in der Nut 10 entsprechend verkeilt, sorgt für ein Anpressen der dem Keil abgewandten Seite des Stabes 11 gegen eine Wand 15 der Nut 10 und eine Kontaktierung und ein Anpressen der anderen Seite des Stabs 11 über den Keil 16.2 hinweg an die andere Wand 15 der Nut 10.

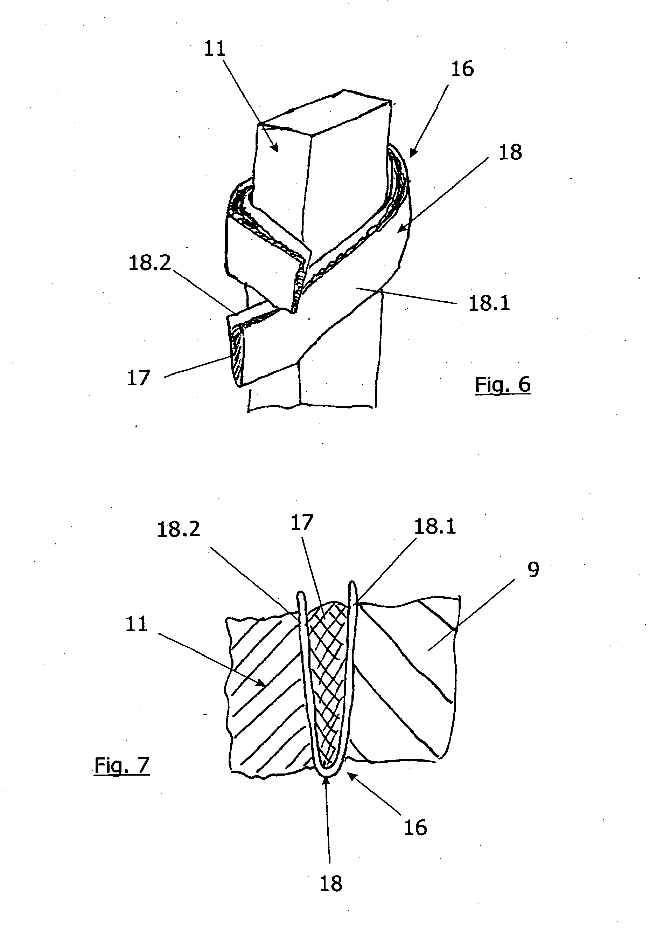

Eine alternative Ausführungsform des Verbindungsmittels 16 ist in der Darstellung der Figur 5, welche im Wesentlichen denselben Ausschnitt wie die Darstellung in den Figuren 3 und 4 zeigt, dargestellt. Der Stab 11 ist hier als prinzipmäßiges Schnittbild dargestellt und zeigt das Material 12 und die elektrische Isolierung 13 in einem einzigen Aufbau, ohne dass diese in dem Schnittbild voneinander unterschieden sind. Dies dient in der Figur 5 sowie in den nachfolgenden Figuren 6 und 7 zur Vereinfachung der Darstellung. Der Stab 11 mit seiner hier nicht explizit erkennbaren Isolierung 13 ist in der Darstellung der Figur 5 von einem pastösen Stoff 17 umgeben, welcher seinerseits von einer Lage 18 umgeben ist. Diese Lage 18 kann beispielsweise als Folie, insbesondere jedoch als elektrisch leitendes Papier ausgebildet sein. Der pastöse Stoff 17 kann als Kitt ausgebildet sein, welcher durch eine geeignete Zugabe von elektrisch leitenden Partikeln, beispielsweise metallischen Partikeln, Graphit oder dergleichen, eine gewisse elektrische Leitfähigkeit aufweist. Insgesamt umgibt dieser Aufbau aus dem pastösen Stoff 17 und der Lage 18, welche das Verbindungsmittel 16 bilden, den Stab 11 mit seiner nicht explizit dargestellten Isolierung mit dem Außenglimmschutz. Der pastöse Stoff 17 ist dabei so ausgebildet, dass er beim Aushärten sein Volumen etwas vergrößert, also aufquillt. Ein solcher Stoff kann beispielsweise auf Basis von Silikonen realisiert sein. Bei der Montage wird nun typischerweise der Stab 11 zusammen mit seiner Isolierung und dem Außenglimmschutz mit dem pastösen Stoff 17 bestrichen und mit der Lage 18 aus leitfähigem Papier umwickelt. Der Aufbau wird danach in die Nut 10 eingebracht. Dann härtet der pastöse Stoff 17 aus und quillt dabei auf. Es kommt zu einer formschlüssigen Verspannung des Stabs 11 in der Nut 10, sodass dieser sicher und zuverlässig gehalten wird und über die elektrisch leitfähige Lage 18 und den elektrisch leitfähigen pastösen Stoff 17 eine elektrische Kontaktierung des Außenglimmschutzes des Stabs 11 mit den Wand 15 der Nut 10 und damit mit dem Rotorkörper 9 realisiert. Gleichzeitig verhindert die Lage 18, dass der pastöse Stoff 17 im Bereich des Rotorkörpers 9 an den Wandungen 15 der Nut 10 anklebt. Damit lässt sich nach dem Lösen des in Figur 2 dargestellte Sperrelements 14 der Aufbau in radialer Richtung nach außen aus dem Bereich des Rotors 6 entfernen, ohne dass der Rotorkörper 9 selbst hierdurch geschädigt werden würde.

Eine erfindungsgemäße Alternative hierzu ist in der Darstellung der Figur 6 zu erkennen. Diese zeigt in einer dreidimensionalen Darstellung die Verwendung der Lage 18, welche durch Falten in wenigstens zwei miteinander verbundene Abschnitte 18.1 und 18.2 aufgeteilt ist. Zwischen diesen beiden Abschnitten 18.1 und 18.2 ist dann der pastöse Stoff 17 eingebracht. Mit diesem Verbund aus gefalteter leitfähiger Lage 18 und pastösem Stoff 17, welche zusammen das Verbindungsmittel 16 ausbilden, zwischen den beiden durch das Falten gebildeten Abschnitten 18.1 und 18.2 wird der mit Isolierung und Außenglimmschutz versehene Stab 11 dann umwickelt. Der so umwickelte Stab wird in die Nut 10 eingeschoben und der pastöse Stoff 17 quillt beim Aushärten in der oben genannten Art und Weise auf. Dadurch wird eine sichere und zuverlässige Fixierung des Stabs 11 in der Nut 10 durch Formschluss erreicht.

In der vergrößerten Schnittdarstellung der Figur 7 ist ein Teil der Wand 15 der Nut 10 sowie ein Teil des mit Isolierung 13 und Außenglimmschutz versehenen Stabes 11, wobei Isolierung und Außenglimmschutz zur Vereinfachung der Darstellung nicht explizit dargestellt sind, gezeigt. Zwischen dem Stab 11 und dem Rotorkörper 9 liegt die gefaltete Lage 18 mit den beiden Abschnitten 18.1 und 18.2 und dazwischen der pastöse Stoff 17. Der Vorteil gegenüber dem oben beschriebenen Aufbau liegt darin, dass der pastöse Stoff 17 nicht elektrisch leitfähig ausgebildet sein muss und beispielsweise ein einfaches Silikon oder dergleichen sein kann. Die elektrische Leitfähigkeit zwischen der Oberfläche des Außenglimmschutzes des Stabes 11 und der Wandung 15 der Nut 10 in dem Rotorkörper 9 wird durch die elektrisch leitfähige Lage 18 realisiert, welche mit ihrem einen Abschnitt 18.2 den Außenglimmschutz des Stabs 11 und mit ihrem anderen Abschnitt 18.1 die Wand 15 der Nut 10 kontaktiert. Außerdem verhindert die Lage 18 das Festkleben des Verbindungsmittels 16 sowohl im Bereich der Wandung 15 der Nut 10 als auch im Bereich des Stabs 11, sodass eine Lösbarkeit des Verbindungsmittels 16 sowohl gegenüber dem Stab 11 als auch gegenüber der Wandung 15 der Nut 10 gewährleistet ist.

## Patentansprüche

1. Asynchronmaschine (7) mit einem Schleifringläufer für den Einsatz mit variabler Drehzahl, mit:
1.1 einem Rotor (6),
1.2 einem Rotorkörper (9), welcher radial in den Rotorkörper (9) eingebrachte Nuten (10) aufweist,
1.3 Wicklungselementen (11) des Rotors, von welchen jeweils wenigstens eines axial durch jede der Nuten (10) verläuft,
1.4 Sperrelementen (14), welche mit dem Rotorkörper (9) formschlüssig zusammenwirken und die Nuten (10) nach radial außen verschließen,
1.5 einer Hochspannungsisolation (13) mit Außenglimmschutz um jedes der Wicklungselemente (11),
**dadurch gekennzeichnet, dass**
1.6 zwischen dem Außenglimmschutz des Wicklungselements (11) und wenigstens einer in Umfangsrichtung benachbarten Wand (15) der Nut (10) elektrisch leitfähige Verbindungsmittel (16) zum lösbaren Verbinden des Wicklungselements (11) mit dem Rotorkörper (9) angeordnet sind, wobei die Verbindungsmittel (16) eine elektrisch leitfähige Lage (18) und einen aushärtenden pastösen Stoff (17) aufweisen, wobei der pastöse Stoff (17) nicht elektrisch leitfähig ist; und
1.7 die Lage (18) wenigstens einmal gefaltet ausgeführt ist, wobei der pastöse Stoff (17) zwischen wenigstens zwei durch das Falten gebildeten Abschnitten (18.1, 18.2) angeordnet ist.

2. Asynchronmaschine (7) nach Anspruch 1, **dadurch gekennzeichnet, dass** der pastöse Stoff (17) beim Aushärten sein Volumen vergrößert.

3. Asynchronmaschine (7) nach Anspruch 1 oder 2, **dadurch gekennzeichnet, dass** die Lage (18) zwischen dem pastösen Stoff (17) und der Wand (15) der Nut (10) angeordnet ist.

4. Asynchronmaschine (7) nach einem der Ansprüche 1 bis 3, **dadurch gekennzeichnet, dass** der pastöse Stoff (17) elastisch aushärtet.

5. Asynchronmaschine (7) nach Anspruch 1, **dadurch gekennzeichnet, dass** die Abschnitte (18.1, 18.2) zwischen dem pastösen Stoff (17) und der Wand (15) der Nut (10) einerseits und dem pastösen Stoff (17) und dem Außenglimmschutz der Wicklungselemente (11) andererseits angeordnet sind.

6. Asynchronmaschine (7) nach einem der Ansprüche 1 bis 5, **dadurch gekennzeichnet, dass** die Verbindungsmittel (16) Keile (16.2) aus elektrisch leitfähigem Material umfassen.

7. Asynchronmaschine (7) nach einem der Ansprüche 1 bis 6, **dadurch gekennzeichnet, dass** die Verbindungsmittel (16) Federelemente (16.1) aus elektrisch leitfähigem Material umfassen.

8. Asynchronmaschine (7) nach Anspruch 7, **dadurch gekennzeichnet, dass** die Federelemente (16.1) als Wellfedern ausgebildet sind.

9. Asynchronmaschine (7) nach einem der Ansprüche 1 bis 8, **gekennzeichnet durch** eine doppelgespeiste Ausführung.

10. Asynchronmaschine (7) nach einem der Ansprüche 1 bis 9, **gekennzeichnet, durch** eine Nennlast von mehr als 30 MVA.

11. Maschinensatz für eine Wasserkraftanlage (1) mit einer Wasserturbine (3) oder Pumpturbine und der Asynchronmaschine (7) nach einem der Ansprüche 1 bis 10, welche von der Wasserturbine (3) oder der Pumpturbine angetrieben ist beziehungsweise die Pumpturbine antreibt.

## Claims

1. Asynchronous machine (7) having a slip-ring rotor for use with a variable rotational speed, with:
1.1 a rotor (6),
1.2 a rotor body (9), having grooves (10) mounted radially into the rotor body (9),
1.3 winding elements (11) of the rotor, from which respectively at least one element runs axially through each of the grooves (10),
1.4 locking elements (14), which co-operate in a form fit manner with the rotor body (9) and close the grooves (10) radially and outwardly,
1.5 an high voltage insulation (13) with an outer corona protection around each of the winding elements (11),
**characterised in that**
1.6 electrically conducting connection means (16) for releasable connection of the winding element (11) with the rotor body (9) are arranged between the outer corona protection of the winding element (11) and at least one neighboring wall (15) of the groove (10) along the around periphery, whereas the connecting means (16) include an electrically conducting layer (18) and a hardening pasty substance (17), whereas the pasty substance (17) is not electrically conductive; and
1.7 the layer (18) is designed with at least one fold, whereas the pasty substance (17) is arranged between at least two sections (18.1, 18.2) formed by the fold.

2. Asynchronous machine (7) according to claim 1, **characterised in that** the pasty substance (17) increases its volume when hardening.

3. Asynchronous machine (7) according to claim 1 or 2, **characterised in that** the layer (18) is arranged between the pasty substance (17) and the wall (15) of the groove (10).

4. Asynchronous machine (7) according to one of the claims 1 to 3, **characterised in that** the pasty substance (17) hardens elastically.

5. Asynchronous machine (7) according to claim 1, **characterised in that** the sections (18.1, 18.2) is arranged between the pasty substance (17) and the wall (15) of the groove (10) on the one hand and the pasty substance (17) and the outer corona protection of the winding elements (11) on the other hand.

6. Asynchronous machine (7) according to one of the claims 1 to 5, **characterised in that** connecting means (16) include wedges (16.2) made of electrically conducting material.

7. Asynchronous machine (7) according to one of the claims 1 to 6, **characterised in that** connecting means (16) include spring elements (16.1) made of electrically conducting material.

8. Asynchronous machine (7) according to claim 7, **characterised in that** the spring elements (16.1) are formed as wave springs.

9. Asynchronous machine (7) according to one of the claims 1 to 8, **characterised by** a double-fed layout.

10. Asynchronous machine (7) according to one of the claims 1 to 9, **characterised by** a nominal load of more than 30 MVA.

11. Machine unit for a hydroelectric power plant (1) having a water turbine (3) or a pump turbine and the asynchronous machine (7) according to one of the claims 1 to 10, which is driven by the water turbine (3) or the pump turbine or drive the pump turbine.

## Revendications

1. Moteur asynchrone (7) avec un rotor à bague de glissement pour une application avec vitesse de rotation variable, comprenant:
1.1 un rotor (6),
1.2 un corps de rotor (9), ayant des rainures (10) posées radialement sur le corps de rotor (9),
1.3 des éléments d'enroulement (11) du rotor, desquels part au moins l'un d'eux pour traverser chacune des rainures (10),
1.4 des éléments de blocage (14), coopérant avec le corps de rotor (9) par engagement positif et fermant hermétiquement les rainures (10) radialement vers l'extérieur,
1.5 une isolation haute tension (13) avec une protection extérieure anti-effluve autour de chacun des éléments d'enroulement (11),
caractérisé en ce
1.6 qu'entre la protection extérieure anti-effluve de l'élément d'enroulement (11) et au moins d'une paroi (15à de la rainure (10), paroi voisine dans le sens de la circonférence, des moyens de liaison électriquement conducteurs (16) sont disposés permettant une connexion amovible de l'élément d'enroulement (11) avec le corps de rotor (9), où les moyens de liaison (16) comportent une couche électriquement conductrice (18) et une substance pâteuse durcissable (17), où la substance pâteuse (17) n'est pas électriquement conductrice ; et
1.7 la couche (18) est repliée au moins une première fois, où la substance pâteuse (17) est disposée entre au moins deux sections (18.1, 18.2) formées par la pliure.

2. Moteur asynchrone (7) selon la revendication 1, **caractérisé en ce que** la substance pâteuse (17) grandit en volume en durcissant.

3. Moteur asynchrone (7) selon les revendications 1 ou 2, **caractérisé en ce que** la couche (18) est disposée entre la substance pâteuse (17) et la paroi (15) de la rainure (10).

4. Moteur asynchrone (7) selon l'une quelconque des revendications 1 à 3, **caractérisé en ce que** la substance pâteuse (17) se durcit de manière élastique.

5. Moteur asynchrone (7) selon la revendication 1, **caractérisé en ce que** les sections (18.1, 18.2) sont disposées entre la substance pâteuse (17) et la paroi (15) de la rainure (10) d'une part et entre la substance pâteuse (17) et la protection extérieure anti-effluve des éléments d'enroulement (11) d'autre part.

6. Moteur asynchrone (7) selon l'une quelconque des revendications 1 à 5, **caractérisé en ce que** les moyens de liaison (16) comportent des cales (16.2) en matériau électriquement conducteur.

7. Moteur asynchrone (7) selon l'une quelconque des revendications 1 à 6, **caractérisé en ce que** les moyens de liaison (16) comportent des éléments à ressort (16.1) en matériau électriquement conducteur.

8. Moteur asynchrone (7) selon la revendication 7, **caractérisé en ce que** les à ressort (16.1) sont constitués de ressorts ondulés.

9. Moteur asynchrone (7) selon l'une quelconque des revendications 1 à 8, **caractérisé par** une construction à double alimentation.

10. Moteur asynchrone (7) selon l'une quelconque des revendications 1 à 9, **caractérisé par** une charge nominale supérieure à 30 MVA.

11. Machine équipée pour une centrale hydroélectrique (1) pourvue d'une turbine à eau (3) ou d'une turbine de pompe et du moteur asynchrone (7) selon l'une des revendications 1 à 10, qui est entraînée par la turbine à eau (3) ou la turbine de pompe ou bien entraîne la turbine de pompe.
